# FASCICULE DE BREVET EUROPEEN

(11) **EP 3 973 249 B1**
(45) Date de publication et mention de la délivrance du brevet: **04.06.2025**
(21) Numéro de dépôt: 20716532.5
(22) Date de dépôt: 10.04.2020
(51) Int. Cl.: G01C 21/16, G06N 20/10

(54) **FILTRAGE PARTICULAIRE ET CENTRALE DE NAVIGATION A CORRELATION DE MESURE**
PARTIKELFILTERUNGSVERFAHREN UND NAVIGATIONSSYSTEM MIT MESSKORRELATION
PARTICLE FILTERING METHOD AND NAVIGATION SYSTEM USING MEASUREMENT CORRELATION

(30) Priorité: 22.05.2019 FR 1905397
(43) Date de publication de la demande: 30.03.2022
(73) Titulaire: Office National d'Etudes et de Recherches Aérospatiales, 91120 Palaiseau (FR)
(72) Inventeur: MERLINGE, Nicolas, 91120 PALAISEAU CEDEX (FR); AUDEBERT, Clément, 92600 ASNIERES (FR); DAHIA, Karim, 91120 PALAISEAU CEDEX (FR); HERISSE, Bruno, 91120 PALAISEAU CEDEX (FR); ALLARD, Jean-Michel, 91120 PALAISEAU CEDEX (FR)
(74) Mandataire: Hautier IP
(86) Numéro de dépôt international: PCT/EP2020/060348
(87) Numéro de publication internationale: WO 2020/233906

(56) Documents cités:
- NICOLAS MERLINGE ET AL: "A Box Regularized Particle Filter for state estimation with severely ambiguous and non-linear measurements", AUTOMATICA, vol. 104, 12 March 2019 (2019-03-12), AMSTERDAM, NL, pages 102 - 110, XP055664432, ISSN: 0005-1098, DOI: 10.1016/j.automatica.2019.02.033

## Description

### Domaine technique

La présente invention concerne un procédé de filtrage particulaire, ainsi qu'une unité de calcul et une centrale de navigation à corrélation de mesure qui mettent en oeuvre un tel procédé. Plus particulièrement, le procédé de filtrage particulaire est du type régularisé à boîtes.

### Technique antérieure

La fonction de navigation d'un aéronef inclut l'estimation de sa position instantanée, sa vitesse instantanée et son orientation instantanée, appelée attitude, dans le référentiel de navigation, aussi appelé trièdre géographique local. L'ensemble des valeurs instantanées des coordonnées de position, c'est-à-dire la latitude, la longitude et l'altitude de l'aéronef, de vitesse, comprenant une coordonnée de vitesse en direction du Nord, une coordonnée de vitesse en direction de l'Est et une coordonnée de vitesse de descente, et des angles d'attitude de l'aéronef, comprenant un angle de roulis, un angle de tangage et un angle de lacet, constitue l'état instantané du système formé par l'aéronef. L'aéronef peut être un avion, un drone ou tout porteur aérien autopropulsé, sans limitation.

L'accélération et la vitesse angulaire de l'aéronef sont mesurées répétitivement et à haute cadence chacune selon trois axes, par exemple à une fréquence de répétition d'environ 1000 Hz (hertz), à l'aide d'accéléromètres et de gyromètres d'une centrale inertielle qui est à bord de l'aéronef. La centrale de navigation délivre alors des estimations des coordonnées de position, de vitesses et des angles d'attitude de l'aéronef, par intégration des résultats des mesures accélérométriques et gyrométriques au cours du temps. Toutefois, les mesures d'accélération et de vitesse angulaire sont affectées d'une erreur, qui est principalement composée d'un biais, d'un facteur d'échelle et d'un processus aléatoire, et l'accumulation des erreurs de mesure résulte en une erreur qui affecte l'estimation de l'état instantané de l'aéronef. Cette erreur sur l'état instantané qui est estimé croît en fonction du temps, et est couramment appelée dérive inertielle. Il est alors nécessaire d'associer la centrale inertielle à au moins un capteur additionnel, afin de corriger ou réduire la dérive inertielle.

Des méthodes usuelles pour corriger ou réduire la dérive inertielle consistent à utiliser des signaux de géolocalisation, tels que des signaux de navigation par satellite, par exemple de type GNSS, pour «global navigation satellite system» en anglais, ou d'utiliser des signaux qui sont produits par des balises situées au sol, par exemple des signaux de radionavigation ou de type GBAS, pour «ground-based augmentation system» ou système de renforcement au sol, ou encore de recevoir par radio une localisation de l'aéronef qui a été effectuée à l'aide d'un radar. Mais de telles méthodes sont sensibles à des brouillages ou à des leurres, à la disponibilité d'une couverture de la zone où se trouve l'aéronef en signaux de localisation ou en communication, etc. Il est alors souhaitable dans certaines circonstances de disposer à bord de l'aéronef d'une méthode qui soit autonome pour corriger et/ou réduire la dérive inertielle. Pour cela, il est courant d'associer à la centrale inertielle une sonde télémétrique, qui mesure une distance entre l'aéronef et le sol. Cette sonde télémétrique peut être un radio-altimètre, un télémètre laser, etc. sans limitation. Elle mesure la distance entre l'aéronef et le sol selon une direction qui peut être fixe ou non par rapport à l'aéronef. Lorsque cette direction de mesure de distance peut être variable, son orientation par rapport à l'aéronef est connue. La centrale inertielle est alors aussi associée à une unité de calcul qui corrèle des résultats de mesures successives qui sont effectuées par la sonde télémétrique avec l'état instantané de l'aéronef tel qu'estimé par la centrale inertielle. Plus précisément, une caractérisation de la zone qui est survolée par l'aéronef est stockée à bord de l'aéronef, par exemple sous forme d'une carte de relief qui associe une valeur de hauteur de relief à chaque couple de valeurs de latitude et de longitude. Un tel enregistrement de carte de relief peut être sous la forme d'une table, avec la latitude et la longitude qui constituent les entrées de la table, et les valeurs de hauteur du relief qui constituent les réponses de lecture dans la table. Alternativement, la caractérisation de la zone survolée peut être stockée sous forme d'une fonction analytique qui permet de calculer les valeurs de hauteur de relief en fonction des valeurs de latitude ou de longitude, ou sous toute autre forme appropriée. Alors, à chaque nouvelle estimation de la position instantanée de l'aéronef qui est produite par la centrale inertielle, une valeur de la distance qui devrait exister entre l'aéronef et le sol est obtenue en interrogeant la caractérisation de la zone survolée telle que stockée à bord de l'aéronef, conformément à la position estimée de l'aéronef. Eventuellement, la valeur de distance aéronef-sol peut résulter d'un calcul qui combine la position estimée de l'aéronef avec le(s) résultat(s) d'une ou plusieurs interrogation(s) de la caractérisation de la zone survolée qui est stockée à bord de l'aéronef, notamment lorsque la direction de mesure de la sonde télémétrique est oblique par rapport à l'axe d'altitude. Un tel calcul est connu de l'Homme du métier, si bien qu'il n'est pas utile de le répéter ici. La valeur de distance aéronef-sol qui est ainsi estimée est ensuite comparée avec le résultat de mesure qui est délivré par la sonde télémétrique. Une telle méthode est couramment appelée navigation avec corrélation de terrain. Plusieurs variantes en ont été proposées, mais certaines d'entre elles présentent une grande sensibilité à l'existence de non-linéarités des profils de terrain. Autrement dit, elles présentent l'inconvénient d'un manque de robustesse dans leur efficacité de convergence vers l'état vrai de l'aéronef, en fonction des profils de terrain possibles.

Les méthodes de navigation à corrélation de terrain qui sont basées sur un filtre particulaire régularisé à boîtes, ou BRPF pour «Box Regularized Particle Filter» en anglais, permettent de corriger la dérive inertielle avec une robustesse plus grande, compatible avec l'existence de non-linéarités et d'ambiguïtés de terrain. L'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110, décrit une telle méthode. Chacune de ces méthodes consiste encore à calculer itérativement un état instantané de l'aéronef à partir d'un dernier état déterminé antérieurement, en utilisant les mesures qui sont effectuées par la centrale inertielle, et en corrélant le résultat obtenu avec la mesure de distance qui est effectuée par la sonde télémétrique, la mesure de distance étant reconstituée avec la caractérisation du relief terrestre qui est embarquée à bord de l'aéronef. Mais, un filtre particulaire régularisé à boîtes procède en manipulant des intervalles d'état, de dimension neuf lorsque chaque état de l'aéronef est constitué par trois coordonnées de position, trois coordonnées de vitesse et trois angles d'attitude comme décrit plus haut. De plus, une valeur de poids à signification probabiliste est associée à chaque intervalle d'état : le poids de chaque intervalle d'état correspond à la probabilité pour que l'état vrai de l'aéronef se situe dans cet intervalle d'état. Toutefois, ces méthodes de navigation avec corrélation de terrain qui sont basées sur des filtres particulaires n'ont pas encore été mises en œuvre pour des aéronefs réels, à cause des ressources de calcul très importantes qui sont nécessaires. En effet, il est requis pour de nombreuses applications aéronautiques que le procédé de navigation à corrélation de terrain qui est utilisé puisse être mis en œuvre par une unité de calcul de type circuit à réseau de portes programmables, ou FGPA pour «Field-Programmable Gate Array» en anglais. Or les circuits de ce type ont des capacités qui sont encore trop limitées.

De façon connue, un procédé de filtrage particulaire régularisé à boîtes comprend au moins une exécution d'une séquence qui inclut les étapes suivantes :
/1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs, chaque intervalle d'état étant possiblement multidimensionnel ;
/2/ une étape de mesure de l'état vrai ;
/3/ une étape de contraction de l'un au moins des intervalles d'état ultérieurs, en fonction d'au moins un résultat de mesure de l'état vrai qui a été obtenu à l'étape /2/ ;
/4/ une étape de mise-à-jour de poids, comprenant d'affecter un poids à chaque intervalle d'état ultérieur en fonction d'une taille de cet intervalle d'état ultérieur tel que résultant de l'étape /3/, d'une taille du même intervalle d'état ultérieur tel que résultant de l'étape /1/ avant l'étape /3/, et d'un poids de l'intervalle d'état antérieur dont a résulté cet intervalle d'état ultérieur lors de l'étape /1/ ; et
/5/ une étape de redistribution des intervalles d'état ultérieurs, comprenant de remplacer au moins un des intervalles d'état ultérieurs i par nᵢ sous-intervalles provenant d'une division de l'intervalle d'état ultérieur i, i étant un indice entier de numérotation des intervalles d'état ultérieurs, et nᵢ étant un nombre des sous-intervalles qui remplacent cet intervalle d'état ultérieur i, chaque sous-intervalle étant destiné à constituer un intervalle d'état antérieur pour une itération ultérieure de la séquence des étapes /1/ à /5/.

L'étape /5/ est couramment exécutée en utilisant une méthode de tirage multinomial. Une telle méthode consiste à tirer des points aléatoirement et répétitivement à l'intérieur d'un segment unidimensionnel, pour déterminer le nombre nᵢ des sous-intervalles qui sont destinés à remplacer l'intervalle d'état ultérieur i, en fonction des poids, notés wᵢ, de tous les intervalles d'état ultérieurs tels que mis-à-jour à l'étape /4/. Le segment de tirage est constitué par une juxtaposition de segments élémentaires, dont les longueurs individuelles correspondent une-à-un aux poids des intervalles d'état ultérieurs. Le nombre nᵢ des sous-intervalles qui remplaceront l'intervalle d'état ultérieur i est alors proportionnel au nombre de points tirés aléatoirement qui appartiennent au segment élémentaire dont la longueur est égale au poids de l'intervalle d'état ultérieur i. Si la valeur de nᵢ qui est ainsi déterminée pour l'un des intervalles d'état ultérieurs est nulle, cet intervalle d'état ultérieur est supprimé, sinon l'intervalle d'état ultérieur i est divisé en nᵢ sous-intervalles, la valeur obtenue pour nᵢ étant statistiquement d'autant plus grande que le poids de l'intervalle d'état ultérieur i tel que résultant de l'étape /4/ est élevé. Mais une telle méthode de tirage multinomial ne peut pas être effectuée de façon parallélisée entre tous les intervalles d'état ultérieurs, de sorte qu'elle génère un goulet d'étranglement dans l'exécution de la séquence des étapes /1/ à /5/. En outre, elle ne permet pas de garantir une durée d'exécution pour l'étape /5/ qui soit constante. En effet, cette méthode de tirage multinomiale requiert de comparer chacun d'une série de nombres tirés aléatoirement, correspondant aux abscisses des points introduits précédemment, aux sommes progressives des poids Si=Σ_{k=1,...,i} wᵢ, dans l'ordre des valeurs croissantes de i jusqu'à identifier la première de ces sommes progressives qui est supérieure au nombre aléatoire. Par principe, le nombre de tests de comparaison de chaque nombre aléatoire à une des sommes progressives des poids n'est pas prévisible. Or, notamment pour une correction de dérive de la centrale inertielle qui est effectuée par corrélation de terrain, il est essentiel que la durée d'exécution de l'étape /5/ soit maîtrisée, pour garantir la périodicité d'actualisation de l'estimation de l'état de l'aéronef en temps réel.

### Problème technique

A partir de cette situation, un but de la présente invention est d'optimiser l'utilisation d'un filtre particulaire régularisé à boîtes, notamment pour que ce filtre puisse être mis en oeuvre à bord d'un aéronef. Autrement dit, l'invention à pour but de proposer un procédé d'implémentation matérielle d'un filtre particulaire régularisé à boîtes. Au-delà, l'invention a pour but de contribuer à ce qu'un procédé de filtrage particulaire régularisé à boîtes puisse être mis en oeuvre par un circuit de type FPGA.

Un autre but de l'invention est de permettre l'utilisation d'un filtre particulaire régularisé à boîtes, en assurant que la durée de calcul qui est nécessaire pour chaque itération d'estimation de l'état instantané du système soit inférieure à une durée maximale contrôlée. En particulier, l'invention a pour but de permettre de paralléliser au moins une partie de l'étape redistribution des intervalles d'état ultérieurs, qui est particulièrement exigeante en ressources de calcul.

### Résumé de l'invention

Pour atteindre l'un au moins de ces buts ou un autre, un premier aspect de l'invention propose un procédé de filtrage particulaire à boîtes pour prédire un état d'un système selon la revendication 1, qui comprend les étapes /1/ à /5/ mentionnées ci-dessus, mais dans lequel l'étape /5/ est modifiée. Selon l'invention, à la place de la méthode de tirage multinomial, l'étape /5/ comprend d'initialiser le nombre de sous-intervalles nᵢ, et comprend la séquence des sous-étapes suivantes /5-1/ à /5-4/ qui est effectuée pour chacun des intervalles d'état ultérieurs utilisé alternativement en tant qu'intervalle de référence :
/5-1/ adopter initialement l'intervalle de référence comme intervalle d'état retenu ;
/5-2/ obtenir un nombre qui est compris entre 0 et 1, appelé facteur aléatoire, par une méthode de tirage considérée comme aléatoire, et sélectionner un des intervalles d'état ultérieurs, différent ou non de l'intervalle de référence, en tant qu'intervalle de comparaison par une méthode de sélection considérée comme aléatoire ; et
/5-3/ si le résultat d'une multiplication du facteur aléatoire par le poids de l'intervalle de référence, tel que mis-à-jour à l'étape /4/, est inférieur au poids de l'intervalle de comparaison, aussi tel que mis-à-jour à l'étape /4/, alors remplacer l'intervalle d'état retenu antérieurement par l'intervalle de comparaison ;
   les sous-étapes /5-2/ et /5-3/ étant répétées plusieurs fois pour chaque intervalle d'état ultérieur utilisé en tant qu'intervalle de référence, puis
/5-4/ augmenter d'une unité le nombre des sous-intervalles destinés à remplacer l'intervalle d'état qui est retenu à l'issue de la répétition des sous-étapes /5-2/ et /5-3/. Chaque intervalle d'état ultérieur est ensuite remplacé lors d'une sous-étape /5-5/ par des sous-intervalles qui proviennent d'une division de cet intervalle d'état ultérieur, conformément au nombre de sous-intervalles qui résulte pour ce même intervalle d'état ultérieur de toutes les exécutions de la sous-étape /5-4/.

Un tel mode d'exécution de l'étape /5/ peut facilement être parallélisé, car il ne procède que par des tests de comparaison qui utilisent les poids d'intervalles d'état pris par couples. En outre, ce mode d'exécution de l'étape /5/ garantit une durée d'exécution qui est déterministe, notamment parce que le nombre de tests de comparaison à effectuer ne dépend pas de la valeur de chaque facteur aléatoire qui est tiré à la sous-étape /5-2/. Lorsque l'étape /5/ est exécutée selon un mode parallélisé, elle peut être appelée étape de redistribution parallélisée des intervalles d'état ultérieurs.

Dans le cadre de l'invention, on entend par méthode de tirage/sélection considérée comme aléatoire une méthode supposée fournir des résultats de tirage/sélection qui sont conformes ou sensiblement conformes à une loi de probabilité uniforme. De telles méthodes sont connues, y compris des méthodes couramment dites pseudo-aléatoires.

Dans diverses mises en œuvre de l'invention, les préférences et perfectionnements suivants peuvent avantageusement être utilisés, indépendamment les uns des autres ou en combinaison de plusieurs d'entre eux :
- les sous-étapes /5-2/ et /5-3/ peuvent être répétées un nombre de fois qui est compris entre 1 et 100 pour chaque intervalle d'état ultérieur utilisé en tant qu'intervalle de référence ;
- à l'étape /5/, le nombre nᵢ des sous-intervalles qui proviennent d'une division de l'intervalle d'état ultérieur i peut être initialisé systématiquement à zéro avant d'effectuer la séquence des sous-étapes /5-1/ à /5-4/ pour cet intervalle d'état ultérieur i utilisé en tant qu'intervalle de référence. Alternativement, une initialisation à la valeur zéro du nombre nᵢ peut être appliquée si le poids de l'intervalle d'état ultérieur i tel que résultant de l'étape /4/ est nul, sinon une initialisation du nombre nᵢ à la valeur un peut être appliquée. Une telle initialisation différenciée des nombres nᵢ assure que chaque intervalle d'état i soit conservé lors de l'étape de redistribution /5/ si son poids tel que résultant de l'étape /4/ est non-nul ;
- l'étape /5/ peut n'être exécutée que si un critère de représentativité n'est pas satisfait par les poids des intervalles d'état ultérieurs tels que mis-à-jour à l'étape /4/. En particulier, un critère de représentativité d'un type dit N-efficace ou d'un type entropique peut être utilisé ;
- à l'étape /4/, le poids mis-à-jour de chaque intervalle d'état ultérieur peut être égal au poids de l'intervalle d'état antérieur dont a résulté cet intervalle d'état ultérieur lors de l'étape /1/, multiplié par la taille de l'intervalle d'état ultérieur tel que résultant de l'étape /3/, et divisé par la taille de l'intervalle d'état ultérieur tel que résultant de l'étape /1/ avant d'appliquer l'étape /3/ à cet intervalle d'état ultérieur ;
- l'étape /5/ peut comprendre en outre la sous-étape supplémentaire suivante, exécutée après que chaque intervalle d'état ultérieur a été remplacé par des sous-intervalles obtenus par division de cet intervalle d'état ultérieur :
   /5-6/ une sous-étape de lissage par noyau, lors de laquelle l'un au moins des sous-intervalles et un poids qui est associé à ce sous-intervalle sont modifiés selon un noyau probabiliste pour former un intervalle d'état antérieur qui est destiné à être utilisé pour l'itération ultérieure de la séquence des étapes /1/ à /5/ ;
- à chaque exécution de la sous-étape /5-2/, le facteur aléatoire peut être obtenu par une méthode de type LFSR, pour «linear feedback shift register» en anglais ou registre à décalage avec rétroaction linéaire. Une telle méthode LFSR peut aussi être utilisée pour sélectionner aléatoirement chaque intervalle de comparaison. Des méthodes LFSR peuvent notamment être utilisées pour générer un nombre pseudo-aléatoire selon un noyau uniforme, notamment une méthode LFSR de Galois ;
- les sous étapes /5-1/ à /5-5/, et la sous-étape /5-6/ le cas échéant, peuvent être effectuées de façon parallélisée pour tous les intervalles d'état ultérieurs utilisés chacun en tant qu'intervalle de référence ; et
- le système peut être un aéronef, l'état du système comprenant alors des coordonnées de position, de vitesse et d'attitude de l'aéronef en cours de vol, et chaque mesure de l'état vrai du système délivrant une valeur d'une distance qui existe entre l'aéronef et un point du sol.

Un deuxième aspect de l'invention propose une unité de calcul selon la revendication 9, cette unité de calcul comprenant au moins une première entrée qui est adaptée pour recevoir des résultats de mesures répétées d'accélération et de vitesse angulaire d'un système, et une seconde entrée qui est adaptée pour recevoir des résultats de mesures répétées de l'état vrai du système, supplémentaires par rapport aux mesures d'accélération et de vitesse angulaire. L'unité de calcul est alors agencée pour exécuter un procédé de filtrage particulaire régularisé à boîtes qui est conforme au premier aspect de l'invention. De cette façon, l'unité de calcul produit en sortie une série d'intervalles d'état avec des poids respectifs, le poids qui est associé à chacun des intervalles d'état correspondant à une valeur de probabilité pour que l'état vrai du système soit dans cet intervalle d'état.

Une telle unité de calcul peut être du type circuit à réseau de portes programmables, ou FPGA, du type circuit à réseau de portes fixes, connu sous l'acronyme DSP pour «Digital Signal Processor» en anglais, ou du type processeur d'unité centrale, connu sous les acronymes CPU pour «Computer Processing Unit» ou RISC pour «Reduced Instruction set Computer».

L'unité de calcul peut comprendre plusieurs sous-unités de calcul qui sont destinées à être dédiées une-à-une aux intervalles d'état ultérieurs, et adaptées pour exécuter de façon parallélisée les sous-étapes /5-1/ à /5-5/, et le cas échéant aussi la sous-étape /5-6/, pour tous les intervalles d'état ultérieurs.

Un troisième aspect de l'invention propose une centrale de navigation à corrélation de mesure, qui est adaptée pour être embarquée à bord d'un véhicule et qui comprend :
- une centrale inertielle, adaptée pour mesurer itérativement des accélérations et des vitesses angulaires du véhicule, et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude de ce véhicule ;
- un système de mesure, adapté pour mesurer itérativement au moins une caractéristique d'un état vrai du véhicule ; et
- une unité de calcul qui est conforme au deuxième aspect de l'invention, et qui est adaptée pour réduire au moins une dérive de position, de vitesse et/ou d'attitude de la centrale inertielle, en utilisant les résultats de mesure de la caractéristique de l'état vrai du véhicule qui sont délivrés par le système de mesure.

Enfin, un quatrième aspect de l'invention propose un véhicule qui comprend une centrale de navigation à corrélation de mesure conforme au troisième aspect de l'invention. Un tel véhicule peut être un aéronef, notamment un avion, un drone volant ou tout porteur aérien autopropulsé, ou un véhicule capable de se déplacer sur un sol, notamment un drone mobile sur sol, un navire, un sous-marin, un engin spatial, notamment une sonde, un satellite, etc. sans limitation. Selon le cas, le système de mesure peut être une sonde télémétrique destinée à mesurer une distance entre le véhicule et un point de sol, un système de repérage d'amères ou d'étoiles, un sonar pour mesurer une hauteur d'eau sous le navire ou le sous-marin, etc.

### Brève description des figures

Les caractéristiques et avantages de la présente invention apparaîtront plus clairement dans la description détaillée ci-après d'exemples de mise en œuvre non-limitatifs, en référence aux figures annexées parmi lesquelles :
[Fig. 1] montre un aéronef qui est équipé d'une centrale inertielle recalée par corrélation de terrain conforme à l'invention ; et
[Fig. 2] est un diagramme qui montre l'enchaînement d'étapes d'un procédé conforme à l'invention, avec une exécution parallélisée des étapes.

### Description détaillée de l'invention

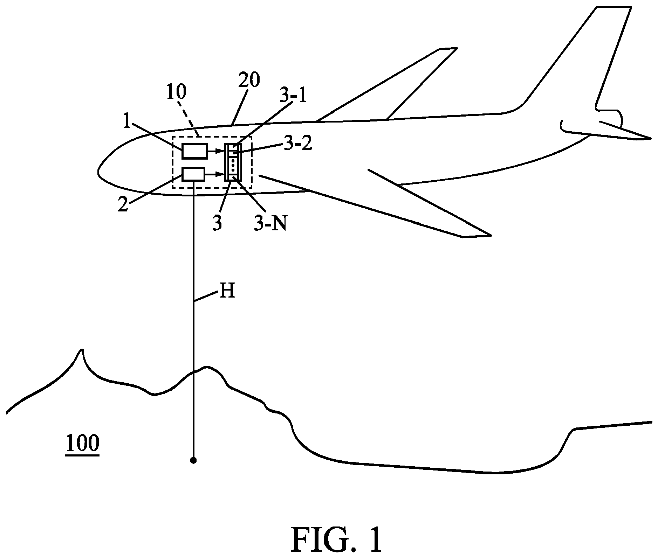

Pour raison de clarté, les dimensions des éléments qui sont représentés symboliquement dans [Fig. 1] ne correspondent ni à des dimensions réelles, ni à des rapports de dimensions réels. En outre, l'invention est décrite à titre d'exemple non-limitatif dans un cas d'application à un aéronef, mais il est entendu qu'elle peut être appliquée à tout véhicule qui est muni d'une centrale de navigation à corrélation de mesure, que ce véhicule soit terrestre, aérien, maritime, spatial, etc.

Conformément à [Fig. 1], un aéronef 20 est équipé d'une centrale de navigation à corrélation de terrain, désignée par la référence 10. La centrale de navigation 10 comprend une centrale inertielle 1, une sonde télémétrique 2 et une unité de calcul 3. De façon connue, la centrale inertielle 1 réalise répétitivement des mesures de trois coordonnées d'accélération et de trois coordonnées de vitesse angulaire de l'aéronef 20, à l'aide d'accéléromètres et de gyromètres non-représentés. Par ailleurs, la sonde télémétrique 2 réalise répétitivement des mesures de la distance H qui existe entre le sol 100 et l'aéronef 20. Cette distance H est mesurée selon une direction qui peut être fixe par rapport à l'aéronef 20, par exemple perpendiculairement à un plan de référence de l'aéronef. Eventuellement, la direction de mesure télémétrique peut être variable par rapport à l'aéronef 20, mais dans un tel cas cette direction de mesure est contrôlée et prise en compte d'une façon adéquate, connue par ailleurs. La distance H varie donc en fonction du relief terrestre qui est survolé par l'aéronef 20, ainsi qu'en fonction de son altitude et de son attitude. Bien que la description soit limitée dans la suite au seul cas de valeurs de la distance H comme résultats de mesures supplémentaires par rapport à celles de la centrale inertielle 1, correspondant au cas d'une navigation avec corrélation de terrain, il est entendu que d'autres mesures supplémentaires peuvent être utilisées alternativement à celles de la distance H, ou en complément de celles-ci. Enfin, l'invention est compatible avec des modèles de centrale inertielle et de sonde télémétrique tels que disponibles commercialement. En particulier, la centrale inertielle peut être d'un type à MEMS, pour «Micro-Electro-Mechanical System» en anglais, à quadrason, à gyrolaser, etc., et la sonde télémétrique peut être un radio-altimètre, un télémètre laser, etc.

Chaque état possible pour l'aéronef 20 peut être composé de trois valeurs de coordonnées spatiales qui identifient une position pour l'aéronef, par exemple dans le référentiel terrestre, trois valeurs de vitesses chacune selon une des coordonnées spatiales, et trois valeurs angulaires pour identifier une orientation de l'aéronef, par exemple trois valeurs d'angles d'Euler, pour un total de neuf coordonnées d'état. Dans ces conditions, un intervalle d'état pour l'aéronef 20 est formé par une combinaison de neuf intervalles unidimensionnels qui sont relatifs chacun séparément à l'une des coordonnées d'état. Un tel intervalle d'état est appelé boîte dans le jargon de l'Homme du métier.

Le procédé est initialisé par la fourniture de plusieurs intervalles d'état initiaux, chacun associé à un poids qui indique une valeur de probabilité pour que l'état vrai de l'aéronef 20 se trouve initialement dans cet intervalle d'état initial. Ainsi, N intervalles d'état initiaux sont fournis, N étant un nombre entier, par exemple égal à 16 ou 32, de préférence inférieur ou égal à 128. Chaque intervalle d'état initial est associé individuellement à une valeur de poids, qui peut être égale à 1/N.

Le procédé est ensuite constitué par des itérations successives d'une séquence d'étapes, chaque nouvelle exécution de la séquence d'étapes produisant une actualisation des intervalles d'état, avec des valeurs actualisées de poids qui sont associées une-à-un aux intervalles d'état actualisés. En outre, chaque nouvelle exécution de la séquence d'étapes est effectuée à partir des intervalles d'état et leurs valeurs de poids associées tels que fournis par l'exécution juste antérieure de la séquence d'étapes.

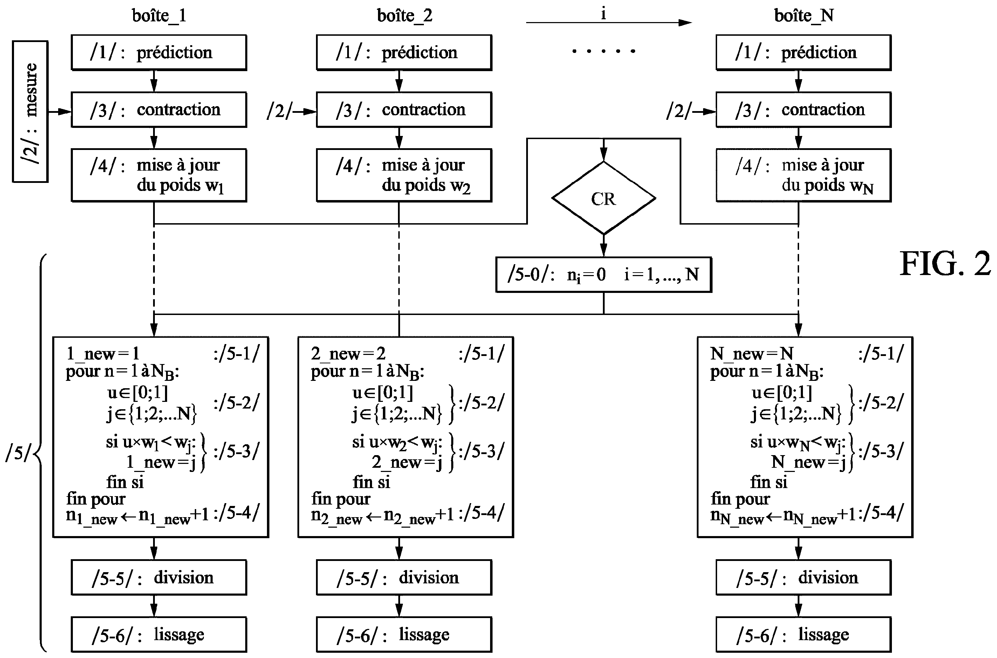

Chaque séquence d'étapes comprend une étape de prédiction, notée /1/ dans [Fig. 2], une étape de mesure notée /2/, une étape de contraction notée /3/, une étape /4/ de mise-à-jour du poids de chaque intervalle d'état, et une étape /5/ de redistribution des intervalles d'état. Les étapes /1/ et /3/ à /5/ sont exécutées pour chaque intervalle d'état, de préférence de façon parallélisée pour tous les intervalles d'état. Ainsi, au sein de l'unité de calcul 3, une première sous-unité de calcul, référencée 3-1 dans [Fig. 1] peut être dédiée à exécuter les étapes /1/ et /3/ à /5/ pour un premier des intervalles d'état, noté boîte_1 dans [Fig. 2], une deuxième sous-unité de calcul 3-2 peut être dédiée à exécuter les étapes /1/ et /3/ à /5/ pour un deuxième des intervalles d'état, noté boîte_2, etc..., une N^{ième} sous-unité de calcul 3-N peut être dédiée à exécuter les étapes /1/ et /3/ à /5/ pour le N^{ième} des intervalles d'état, noté boîte_N. Etant donné que l'étape /5/ produit une redistribution des intervalles d'état tels que résultant de l'étape /3/, elle est de préférence exécutée de façon à conserver un nombre constant d'intervalles d'état. Alors l'unité de calcul 3 peut être conçue et dimensionnée pour comprendre les N sous-unités de calcul 3-1, 3-2,..., 3-N.

Pour chaque intervalle d'état, l'étape /1/, dite de prédiction, consiste à recueillir les résultats de dernières mesures d'accélération et de vitesse angulaire, tels que délivrés par la centrale inertielle 1. Eventuellement, les résultats de plusieurs mesures qui ont été effectuées par la centrale inertielle 1 depuis l'exécution précédente de la séquence des étapes /1/ à /5/ peuvent être recueillis. Pour chacun des intervalles d'état, l'étape /1/ comprend aussi de calculer une évolution de cet intervalle d'état pendant la période de temps qui s'est écoulée entre les deux exécutions de l'étape /1/, relatives à l'itération précédente et la nouvelle itération en cours de la séquence des étapes /1/ à /5/. Le principe de calcul d'une telle évolution de chaque intervalle d'état, à partir des résultats des mesures d'accélération et de vitesse angulaire, est supposé connu de l'Homme du métier. On pourra se référer à ce sujet à l'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110. Cette étape /1/ aboutit à une translation, accompagnée le plus souvent d'un changement de longueur, de chaque intervalle unidimensionnel qui est relatif à l'une des coordonnées d'état de l'aéronef 20. Dans la partie générale de la présente description, chaque intervalle d'état tel qu'existant au moment de débuter l'exécution de l'étape /1/ a été appelé intervalle d'état antérieur, et cet intervalle d'état tel que modifié par l'étape /1/ a été appelé intervalle d'état ultérieur.

L'étape /2/, dite de mesure, consiste à recueillir le résultat de la dernière mesure de distance H tel que délivré par la sonde télémétrique 2. Eventuellement, les résultats de plusieurs dernières mesures qui ont été effectuées par la sonde télémétrique 2 depuis l'exécution précédente de l'étape /2/, lors de l'itération précédente de la séquence des étapes /1/ à /5/, peuvent être recueillis.

L'étape /3/, dite de contraction, consiste à réduire la taille de chaque intervalle d'état en fonction d'incompatibilités qui existeraient entre des parties de cet intervalle d'état et le ou les dernier(s) résultat(s) de mesure de distance H recueillis à l'étape /2/. Typiquement, les six coordonnées de position et d'attitude de l'aéronef 20, telles que pouvant varier à l'intérieur de chaque intervalle d'état tel que re-déterminé à l'étape /1/, sont combinées à des valeurs de hauteur de relief lues dans une carte de terrain qui est mémorisée, afin d'obtenir une estimation de la distance H associée à chaque état. Un tel calcul peut être effectué de la façon connue qui a été rappelée au début de cette description. La distance H ainsi estimée est comparée au résultat de la mesure de l'étape /2/. De façon générale, une équation implicite peut être mise en œuvre pour convertir chaque état de l'aéronef 20 en une valeur de distance H, en utilisant la carte de terrain mémorisée. Mais une telle équation, appelée équation d'observation par l'Homme du métier, peut être difficile à inverser localement, si bien que modéliser sa fonction inverse par une partie de fonction analytique et une partie de fonction tabulée peut être avantageuse. L'Homme du métier pourra encore se reporter à l'article de Merlinge et al., Automatica 104(2019), cité plus haut, au sujet de l'étape /3/ qui n'est pas l'objet de l'amélioration du procédé que procure l'invention.

L'étape /4/, dite de mise-à-jour, consiste à mettre-à-jour le poids de chaque intervalle d'état tel que résultant de l'étape /3/. Par exemple, une nouvelle valeur du poids de l'intervalle d'état boîte_1 peut être égale à la valeur du poids de l'intervalle d'état boîte_1 telle qu'existant avant d'effectuer cette mise-à-jour, multipliée par la taille de l'intervalle d'état boîte_1 tel que résultant de l'étape de contraction /3/, et divisée par la taille de l'intervalle d'état boîte_1 tel que résultant de l'étape de prédiction /1/ avant d'appliquer l'étape de contraction /3/. Des calculs analogues de mise-à-jour de poids peuvent être effectués séparément pour l'intervalle d'état boîte_2,..., boîte_N. D'autres formules de mise-à-jour des poids peuvent être adoptées alternativement. Eventuellement, les valeurs de poids telles que résultant de l'une de ces formules peuvent en plus être corrigées, par exemple en les multipliant par un facteur commun non nul pour assurer que leur somme soit égale à l'unité.

Les étapes de prédiction /1/, de contraction /3/ et de mise-à-jour des poids /4/ qui viennent d'être décrites sont avantageusement effectuées de façon parallélisée pour les intervalles d'état boîte_1, boîte_2,..., boîte_N par les sous-unités de calcul 3-1, 3-2,...,3-N. Un gain de temps de calcul en résulte.

L'étape /5/ a pour but de redistribuer les intervalles d'état tels que résultant de l'étape /3/, pour obtenir une meilleure représentativité statistique des états qui sont possibles pour l'aéronef 20. L'exécution de cette étape /5/ peut être soumise au résultat d'un test optionnel désigné par CR dans [Fig. 2]. Ce test consiste à déterminer si un critère de représentativité est satisfait par les intervalles d'état avec leurs valeurs de poids respectives. Il porte sur tous les poids wᵢ tels qu'actualisés à l'étape /4/, où wᵢ est le poids qui est associé à l'intervalle d'état boîte_i, i étant un indice entier variant de 1 à N. Un premier critère de représentativité qui peut être utilisé est celui connu sous l'appellation de critère N-efficace. Ce critère est satisfait si (Σ_{i=1...N} wᵢ²)⁻¹ < θ_{eff}·N, où θ_{eff} est un paramètre d'ajustement du critère N-efficace, compris entre 0 et 1. Un autre critère de représentativité aussi possible est celui qui est connu sous l'appellation de critère entropique : il est satisfait si log(N) + Σ_{i=1...N} wᵢlog(wᵢ) > θₑₙₜ·N, où θₑₙₜ est un paramètre d'ajustement du critère entropique, compris entre 0 et 1. Mais d'autres critères de représentativité qui sont aussi connus de l'Homme du métier peuvent encore être utilisés alternativement. L'étape /5/ de redistribution des intervalles d'état est alors appliquée si le critère de représentativité n'est pas satisfait.

L'étape /5/ comprend d'abord de déterminer un nombre de division nᵢ qui est attribué à l'intervalle d'état boîte_i, avec l'indice i qui numérote encore les intervalles d'état de 1 à N. Elle débute alors par une initialisation à zéro de tous les nombres de division nᵢ. Cette sous-étape d'initialisation est notée /5-0/ dans [Fig. 2]. Les sous-étapes /5-1/ à /5-4/ à exécuter ensuite à l'intérieur de l'étape /5/ aboutissent à la détermination des nombres de division nᵢ. Puis l'étape /5/ comprend les sous-étapes /5-5/ et /5-6/ pour déterminer nᵢ sous-intervalles d'état qui remplaceront l'intervalle d'état boîte_i pour une nouvelle exécution complète de la séquence des étapes /1/ à /5/.

La méthode de détermination des nombres de division nᵢ est décrite maintenant pour l'intervalle d'état générique boîte_i. Elle est basée sur les poids de tous les intervalles d'état boîte_1, boîte_2,..., boîte_N, tels que mis-à-jour à l'étape /4/. [Fig. 2] indique cette méthode sous forme de pseudocode pour i=1, 1=2 et i=N. La valeur du poids wᵢ est comparée à celles des poids respectifs de N_{B} intervalles d'état qui sont sélectionnés de façon aléatoire ou pseudo-aléatoire, en étant multipliée à chaque fois par un facteur aléatoire ou pseudo-aléatoire noté u et appartenant à l'intervalle [0 ; 1]. L'intervalle d'état i a été appelé intervalle de référence dans la partie générale de la présente description, et chacun des N_{B} intervalles d'état sélectionnés de façon aléatoire ou pseudo-aléatoire a été appelé intervalle de comparaison, avec son poids qui est noté wⱼ de façon générique, j étant un indice de numérotation des N_{B} intervalles de comparaison. Les intervalles de comparaison sont sélectionnés séparément et indépendamment pour chaque intervalle de référence boîte_i. Alors chaque fois que pour un des intervalles de comparaison boîte_j l'inégalité suivante est vérifiée, u · wᵢ < wⱼ, l'intervalle d'état boîte_j est retenu dans un emplacement de mémoire à la place d'un intervalle d'état qui a été retenu antérieurement aussi lorsque l'intervalle d'état boîte_i est utilisé en tant qu'intervalle de référence. Ainsi, la détermination des nombres de division nᵢ comprend la séquence des sous-étapes suivantes, pour chaque intervalle d'état boîte_i utilisé en tant qu'intervalle de référence :
- une sous-étape /5-1/, dans laquelle l'indice de l'intervalle d'état retenu en mémoire, noté i_new, est initialisé à la valeur i ;
- une sous-étape /5-2/, dans laquelle un nombre u est tiré de façon aléatoire ou pseudo-aléatoire entre 0 et 1, les valeurs 0 et 1 étant possibles, et un intervalle de comparaison boîte_j est sélectionné de façon aléatoire ou pseudo-aléatoire parmi les intervalles d'état boîte_1, boîte_2,..., boîte_N, y compris boîte_i ; et
- une sous-étape /5-3/ dans laquelle la valeur d'indice d'intervalle d'état qui est retenue en mémoire est remplacée par j si la condition u · wᵢ < wⱼ est vérifiée.
Les sous-étapes /5-2/ et /5-3/ sont répétées N_{B} fois pour chaque intervalle d'état boîte-i utilisé comme intervalle de référence, par exemple un nombre de fois N_{B} qui est fixe entre 4 et 11, puis le nombre de division de l'intervalle d'état qui est désigné par l'indice tel que retenu en mémoire à l'issue des N_{B} itérations des sous-étapes /5-2/ et /5-3/, est incrémenté d'une unité. Autrement dit, une sous-étape supplémentaire /5-4/ consiste à remplacer la valeur n_{i_new} par n_{i_new} + 1. Cette sous-étape /5-4/ est donc exécutée en tout N fois, une fois pour chaque intervalle d'état boîte_i utilisé en tant qu'intervalle de référence. Les sous-étapes /5-1/ à /5-4/ sont avantageusement exécutées de façon parallélisée pour tous les intervalles d'état utilisés alternativement en tant qu'intervalle de référence, par les sous-unités de calcul 3-1, 3-2,...,3-N qui sont respectivement dédiées aux intervalles d'état boîte_1, boîte_2,..., boîte_N de la disposition en colonnes de [Fig. 2].

Chaque nombre u et chaque intervalle de comparaison boîte_j peuvent être sélectionnés de façon aléatoire ou pseudo-aléatoire en utilisant diverses méthodes connues de génération de nombres aléatoires. Parmi ces méthodes, celles qui utilisent un registre à décalage avec rétroaction linéaire (LFSR) peuvent être préférées, y compris une méthode LFSR à noyau uniforme, notamment une telle méthode LFSR de Galois.

Chaque intervalle d'état boîte_i est ensuite divisé en nᵢ sous-intervalles à la sous-étape /5-5/, par exemple de l'une des façons qui sont décrites dans les articles suivants :
«An introduction to box particle filtering [lecture notes]» de Gning, A., Ristic, B., Mihaylova, L., & Abdallah, F., IEEE Signal Processing Magazine (2013), Vol. 30(4), pp. 166-171 ; et
«A Box Regularized Particle Filter for state estimation with severely ambiguous and non-linear measurements» de Merlinge, N., Dahia, K., Piet-Lahanier, H., Brusey, J., & Horri, N., Automatica (2019), Vol. 104, pp. 102-110.
Eventuellement, les nombres de division nᵢ peuvent être corrigés préalablement pour assurer que leur somme soit égale à N. Une telle correction peut procéder par annulation de ceux des nombres de division nᵢ qui sont les plus petits, ou en appliquant une correction linéaire puis un arrondi à tous les nombres de division nᵢ, ou par combinaison de ces deux méthodes de correction, ou encore en utilisant toute autre méthode usuelle. Si l'un des nombre de division nᵢ est nul, l'intervalle d'état correspondant boîte_i est écarté de la suite du procédé. Les sous-intervalles qui résultent ainsi de chaque intervalle d'état boîte_i, à l'issue de l'exécution correspondante de la sous-étape /5-5/, peuvent être affectés individuellement d'un poids qui est égal à wᵢ/nᵢ. Eventuellement, les valeurs de poids qui sont obtenues ainsi pour les N sous-intervalles peuvent être corrigées, par exemple en les multipliant par un nouveau facteur constant pour assurer que leur somme soit égale à l'unité. Il est également possible de ne réaliser l'étape /5/ que pour ceux des intervalles d'état boîte_i qui ont un poids non-nul. Les sous-intervalles sont alors affectés un-à-une aux sous-unités de calcul 3-1, 3-2,..., 3-N, pour remplacer les intervalles d'état tels que résultant des exécutions de l'étape /3/, et être utilisés en tant que nouveaux intervalles d'état.

Enfin, la sous-étape /5-6/, optionnelle, consiste à corriger les nouveaux intervalles d'état et leurs valeurs de poids associées, tels que résultant de la sous-étape /5-5/. Ces modifications peuvent consister en des translations des intervalles élémentaires des coordonnées d'état, pour améliorer la distribution de probabilité qu'ils constituent avec leurs poids associés pour l'état vrai de l'aéronef 20. Des méthodes de lissage par noyau, aussi appelées régularisation par noyau, y compris à noyau uniforme ou gaussien, peuvent être utilisées dans ce but, telles que décrites dans l'article de Merlinge et al., Automatica 104(2019).

La sous-étape /5-5/ peut donc aussi être exécutée de façon parallélisée pour tous les intervalles d'état boîtes_i, de même que la sous-étape /5-6/ pour tous les intervalles d'état nouvellement adoptés. Ainsi, à l'exception du test CR pour évaluer le critère de représentativité, toutes les étapes et sous-étapes du procédé peuvent être exécutées de façon parallélisée, en utilisant les N sous-unités de calcul 3-1, 3-2,..., 3-N au sein de l'unité de calcul 3.

Les intervalles d'état mis-à-jour, tels que résultant de la sous-étape /5-5/ ou éventuellement de la sous-étape /5-6/, avec leurs poids associés, constituent le résultat du procédé de filtrage particulaire à boîtes pour la dernière exécution de la séquence des étapes /1/ à /5/, en fournissant une distribution de probabilité qui caractérise l'état vrai de l'aéronef 20. Ces intervalles d'état mis-à-jour, associés à leurs poids respectifs, peuvent alors être utilisés en tant qu'intervalles d'état pour une nouvelle exécution de la séquence des étapes /1/ à /5/.

Il est entendu que l'invention peut être reproduite en modifiant des aspects secondaires des modes de mise en oeuvre qui ont été décrits en détail ci-dessus, tout en conservant certains au moins des avantages cités. Parmi de telles modifications possibles, les suivantes sont citées de façon non-limitative :
- des algorithmes alternatifs peuvent être utilisés pour certaines étapes ou sous-étapes du procédé ;
- la centrale inertielle peut être utilisée comme source de mesure de l'état complet du véhicule. L'état du système tel que considéré pour l'invention comprend alors trois valeurs d'accélération et trois valeurs de vitesse angulaire, selon les trois coordonnées spatiales, en plus des trois valeurs de coordonnées spatiales qui identifient une position pour le véhicule, des trois valeurs de vitesses et des trois valeurs angulaires d'attitude. Dans ce cas, chaque état du système comprend des valeurs pour quinze coordonnées d'état ;
- un modèle a priori de dynamique d'évolution d'état peut être utilisé, pouvant tenir compte de commandes qui sont appliquées au(x) moteur(s) et au système de contrôle d'attitude du véhicule ; et
- l'unité de calcul peut être un processeur à structure ARM, un processeur à plusieurs coeurs de calcul, un ou plusieurs processeur(s) graphique(s), etc, à la place d'une puce de type FPGA ou DSP.

Enfin, l'invention peut être appliquée à d'autres domaines que l'aéronautique. Par exemple, un procédé de filtrage particulaire régularisé à boîtes qui est conforme à l'invention peut aussi être mis en œuvre pour un véhicule au sol, un navire maritime de surface, un sous-marin, un satellite ou une sonde spatiale, en utilisant à chaque fois un référentiel et des mesures d'état vrai qui sont appropriés.

## Revendications

1. Procédé de filtrage particulaire régularisé à boîtes, pour prédire un état d'un système, ledit système étant un véhicule qui est muni d'une centrale de navigation à corrélation de mesure, notamment un aéronef, un véhicule au sol, un navire maritime de surface, un sous-marin, un satellite ou une sonde spatiale, le procédé comprenant au moins une exécution d'une séquence qui inclut les étapes suivantes :
/1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs ;
/2/ une étape de mesure d'un état vrai du système ;
/3/ une étape de contraction de l'un au moins des intervalles d'état ultérieurs, en fonction d'au moins un résultat de mesure de l'état vrai qui a été obtenu à l'étape /2/ ;
/4/ une étape de mise-à-jour de poids, comprenant d'affecter un poids à chaque intervalle d'état ultérieur en fonction d'une taille dudit intervalle d'état ultérieur tel que résultant de l'étape /3/, d'une taille dudit intervalle d'état ultérieur tel que résultant de l'étape /1/ avant l'étape /3/, et d'un poids de l'intervalle d'état antérieur dont a résulté ledit intervalle d'état ultérieur lors de l'étape /1/ ; et
/5/ une étape de redistribution des intervalles d'état ultérieurs, comprenant de remplacer au moins un des intervalles d'état ultérieurs i par nᵢ sous-intervalles provenant d'une division de l'intervalle d'état ultérieur i, i étant un indice entier de numérotation des intervalles d'état ultérieurs et nᵢ étant un nombre des sous-intervalles qui remplacent ledit intervalle d'état ultérieur i, chaque sous-intervalle étant destiné à constituer un intervalle d'état antérieur pour une itération ultérieure de la séquence des étapes /1/ à /5/,
le procédé étant **caractérisé en ce que** l'étape /5/ comprend d'initialiser le nombre de sous-intervalles nᵢ, et comprend la séquence des sous-étapes suivantes /5-1/ à /5-4/ qui est effectuée pour chacun des intervalles d'état ultérieurs utilisé alternativement en tant qu'intervalle de référence :
/5-1/ adopter initialement l'intervalle de référence comme intervalle d'état retenu ;
/5-2/ obtenir un nombre qui est compris entre 0 et 1, appelé facteur aléatoire, par une méthode de tirage considérée comme aléatoire, et sélectionner un des intervalles d'état ultérieurs, différent ou non de l'intervalle de référence, en tant qu'intervalle de comparaison par une méthode de sélection considérée comme aléatoire ;
/5-3/ si un résultat d'une multiplication du facteur aléatoire par le poids de l'intervalle de référence, tel que mis-à-jour à l'étape /4, est inférieur au poids de l'intervalle de comparaison, aussi tel que mis-à-jour à l'étape /4/, alors remplacer l'intervalle d'état retenu antérieurement par l'intervalle de comparaison ;
les sous-étapes /5-2/ et /5-3/ étant répétées plusieurs fois pour chaque intervalle d'état ultérieur utilisé en tant qu'intervalle de référence, puis
/5-4/ augmenter d'une unité le nombre des sous-intervalles destinés à remplacer l'intervalle d'état qui est retenu à l'issue de la répétition des sous-étapes /5-2/ et /5-3/ ; et chaque intervalle d'état ultérieur étant ensuite remplacé lors d'une sous-étape /5-5/ par des sous-intervalles provenant d'une division dudit intervalle d'état ultérieur, conformément au nombre de sous-intervalles qui résulte pour ledit intervalle d'état ultérieur de toutes les exécutions de la sous-étape /5-4/.

2. Procédé selon la revendication 1, suivant lequel les sous-étapes /5-2/ et /5-3/ sont répétées un nombre de fois qui est compris entre 1 et 100 pour chaque intervalle d'état ultérieur utilisé en tant qu'intervalle de référence.

3. Procédé selon la revendication 1 ou 2, suivant lequel l'étape /5/ n'est exécutée que si un critère de représentativité n'est pas satisfait par les poids des intervalles d'état ultérieurs tels que mis-à-jour à l'étape /4/.

4. Procédé selon l'une quelconque des revendications précédentes, suivant lequel, à l'étape /4/, le poids mis-à-jour de chaque intervalle d'état ultérieur est égal au poids de l'intervalle d'état antérieur dont a résulté ledit intervalle d'état ultérieur lors de l'étape /1/, multiplié par la taille de l'intervalle d'état ultérieur tel que résultant de l'étape /3/, et divisé par la taille de l'intervalle d'état ultérieur tel que résultant de l'étape /1/ avant d'appliquer l'étape /3/ audit intervalle d'état ultérieur.

5. Procédé selon l'une quelconque des revendications précédentes, suivant lequel l'étape /5/ comprend en outre la sous-étape supplémentaire suivante, exécutée après que chaque intervalle d'état ultérieur a été remplacé par des sous-intervalles obtenus par division dudit intervalle d'état ultérieur :
/5-6/ une sous-étape de lissage par noyau, lors de laquelle un au moins des sous-intervalles et un poids associé audit sous-intervalle sont modifiés selon un noyau probabiliste pour former un intervalle d'état antérieur qui est destiné à être utilisé pour l'itération ultérieure de la séquence des étapes /1/ à /5/.

6. Procédé selon l'une quelconque des revendications précédentes, suivant lequel, à chaque exécution de la sous-étape /5-2/, le facteur aléatoire est obtenu par une méthode de type à registre à décalage avec rétroaction linéaire, et/ou l'intervalle de comparaison est sélectionné une méthode de type à registre à décalage avec rétroaction linéaire.

7. Procédé selon l'une quelconque des revendications précédentes, suivant lequel les sous étapes /5-1/ à /5-5/ sont effectuées de façon parallélisée pour tous les intervalles d'état ultérieurs utilisés chacun en tant qu'intervalle de référence.

8. Procédé selon l'une quelconque des revendications précédentes, suivant lequel le système est un aéronef (20), l'état du système comprend des coordonnées de position, de vitesse et d'attitude de l'aéronef en cours de vol, et suivant lequel chaque mesure de l'état vrai du système délivre une valeur d'une distance qui existe entre l'aéronef et un point de sol.

9. Unité de calcul (3), comprenant au moins une première entrée adaptée pour recevoir des résultats de mesures répétées d'accélération et de vitesse angulaire d'un système, une seconde entrée adaptée pour recevoir des résultats de mesures répétées d'un état vrai du système, supplémentaires par rapport aux mesures d'accélération et de vitesse angulaire, et l'unité de calcul étant agencée pour exécuter un procédé de filtrage particulaire régularisé à boîtes qui est conforme à l'une quelconque des revendications précédentes, de façon à produire en sortie une série d'intervalles d'état avec des poids respectifs, le poids qui est associé à chacun des intervalles d'état correspondant à une valeur de probabilité pour que l'état vrai du système soit dans ledit intervalle d'état.

10. Unité de calcul (3) selon la revendication 9, de type circuit à réseau de portes programmables, circuit à réseau de portes fixes, ou processeur d'unité centrale.

11. Unité de calcul (3) selon la revendication 9 ou 10, comprenant plusieurs sous-unités de calcul (3-1, 3-2,..., 3-N) qui sont destinées à être dédiées une-à-une aux intervalles d'état ultérieurs, et adaptées pour exécuter de façon parallélisée au moins les sous-étapes /5-1/ à /5-5/, pour tous les intervalles d'état ultérieurs.

12. Centrale de navigation à corrélation de mesure (10), adaptée pour être embarquée à bord d'un véhicule, comprenant :
- une centrale inertielle (1), adaptée pour mesurer itérativement des accélérations et des vitesses angulaires du véhicule, et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude dudit véhicule ;
- un système de mesure (2), adapté pour mesurer itérativement au moins une caractéristique d'un état vrai du véhicule ; et
- une unité de calcul (3) conforme à l'une quelconque des revendication 9 à 11, et adaptée pour réduire au moins une dérive de la centrale inertielle (1), parmi une dérive de position, une dérive de vitesse et une dérive d'attitude, en utilisant des résultats de mesure de la caractéristique de l'état vrai du véhicule qui sont délivrés par le système de mesure (2).

13. Véhicule, comprenant une centrale de navigation à corrélation de mesure (10) qui est conforme à la revendication 12.

## Patentansprüche

1. Verfahren zur feldgeregelten Teilchenfilterung, um einen Zustand eines Systems vorherzusagen, wobei das System ein Fahrzeug, das mit einer Navigationszentrale mit Messkorrelation versehen ist, insbesondere ein Luftfahrzeug, Bodenfahrzeug, Oberflächenschiff, U-Boot, Satellit oder Raumsonde ist, wobei das Verfahren mindestens eine Ausführung einer Sequenz umfasst, welche die folgenden Schritte beinhaltet:
/1/ einen Vorhersageschritt, der das Vorhersagen von späteren Zustandsintervallen umfasst, wobei jedes spätere Zustandsintervall durch Anwenden mindestens einer Ausbreitungsregel auf eines von einer Vielzahl von früheren Zustandsintervallen erhalten wird;
/2/ einen Messschritt eines wahren Zustands des Systems;
/3/ einen Kontraktionsschritt von mindestens einem der späteren Zustandsintervalle, in Abhängigkeit von mindestens einem Messergebnis des wahren Zustands, das in Schritt /2/ erhalten worden ist;
/4/ einen Schritt einer Gewichtungsaktualisierung, umfassend das Zuweisen einer Gewichtung zu jedem späteren Zustandsintervall in Abhängigkeit von einer Größe des späteren Zustandsintervalls, wie sie aus Schritt /3/ resultiert, einer Größe des späteren Zustandsintervalls, wie sie aus Schritt /1/ vor Schritt /3/ resultiert, und einer Gewichtung des vorherigen Zustandsintervalls, aus dem sich das spätere Zustandsintervall in Schritt /1/ ergeben hat; und
/5/ einen Schritt der Umverteilung der späteren Zustandsintervalle, umfassend das Ersetzen mindestens eines der späteren Zustandsintervalle i durch nᵢ Teilintervalle, die aus einer Teilung des späteren Zustandsintervalls i stammen, wobei i ein ganzer Index zur Nummerierung der späteren Zustandsintervalle ist und nᵢ eine Anzahl der Teilintervalle ist, die das spätere Zustandsintervall i ersetzen, wobei jedes Teilintervall dazu bestimmt ist, ein früheres Zustandsintervall für eine spätere Iteration der Sequenz der Schritte /1/ bis /5/ darzustellen, wobei das Verfahren **dadurch gekennzeichnet ist, dass** der Schritt /5/ die Initialisierung der Anzahl der Teilintervalle nᵢ umfasst und die Sequenz der folgenden Teilschritte /5-1/ bis /5-4/ umfasst, die für jedes der späteren Zustandsintervalle durchgeführt wird, die alternativ als Referenzintervall verwendet werden:
/5-1/ anfänglich das Referenzintervall als gewähltes Statusintervall anzunehmen;
/5-2/ durch eine als zufällig angesehene Auswahlmethode eine Zahl, die zwischen 0 und 1 liegt, zu erhalten, die als Zufallsfaktor bezeichnet wird, und durch eine als zufällig angesehene Auswahlmethode eines der späteren Zustandsintervalle als Vergleichsintervall auszuwählen, das sich vom Referenzintervall unterscheidet oder nicht;
/5-3/ wenn ein Ergebnis einer Multiplikation des Zufallsfaktors mit der Gewichtung des Referenzintervalls, wie in Schritt /4 aktualisiert, kleiner ist als die Gewichtung des Vergleichsintervalls, ebenfalls wie in Schritt /4/ aktualisiert, dann das zuvor ausgewählte Statusintervall durch das Vergleichsintervall zu ersetzen;
wobei die Teilschritte /5-2/ und /5-3/ für jedes spätere Zustandsintervall, das als Referenzintervall verwendet wird, mehrmals wiederholt werden, und
/5-4/ die Anzahl der Teilintervalle, die dazu bestimmt sind, das Zustandsintervall zu ersetzen, das nach der Wiederholung der Teilschritte /5-2/ und /5-3/ gewählt wird, um eine Einheit zu erhöhen; und jedes spätere Zustandsintervall danach bei einem Teilschritt /5-5/durch Teilintervalle, die aus einer Teilung des späteren Zustandsintervalls stammen, entsprechend der Anzahl der Teilintervalle ersetzt wird, die für das spätere Zustandsintervall aus allen Ausführungen des Teilschritts /5-4/ resultiert.

2. Verfahren nach Anspruch 1, wobei die Teilschritte /5-2/ und /5-3/ eine Anzahl von Malen, die zwischen 1 und 100 liegen, für jedes als Referenzintervall verwendete spätere Zustandsintervall wiederholt werden.

3. Verfahren nach Anspruch 1 oder 2, wobei der Schritt /5/ nur dann ausgeführt wird, wenn ein Repräsentativitätskriterium durch die Gewichtungen der späteren Zustandsintervalle, wie in Schritt /4/ aktualisiert, nicht erfüllt ist.

4. Verfahren nach einem der vorstehenden Ansprüche, wobei in Schritt /4/ die aktualisierte Gewichtung jedes späteren Zustandsintervalls gleich der Gewichtung des früheren Zustandsintervalls ist, aus dem das spätere Zustandsintervall in Schritt /1/ resultiert, multipliziert mit der Größe des späteren Zustandsintervalls, wie aus Schritt /3/ resultiert, und geteilt durch die Größe des späteren Zustandsintervalls, wie aus Schritt /1/ resultiert, bevor Schritt /3/ auf das spätere Zustandsintervall angewendet wird.

5. Verfahren nach einem der vorstehenden Ansprüche, wobei der Schritt /5/ weiter den folgenden zusätzlichen Teilschritt umfasst, der ausgeführt wird, nachdem jedes spätere Zustandsintervall durch Teilintervalle ersetzt wurde, die durch Teilen des späteren Zustandsintervalls erhalten werden:
/5-6/ einen Teilschritt zum Glätten je Kern, bei dem mindestens eines der Teilintervalle und eine mit diesem Teilintervall verknüpfte Gewichtung gemäß einem probabilistischen Kern modifiziert werden, um ein früheres Zustandsintervall zu bilden, das dazu bestimmt ist, für die spätere Iteration der Sequenz der Schritte /1/ bis /5/ verwendet zu werden.

6. Verfahren nach einem der vorstehenden Ansprüche, wobei bei jeder Ausführung des Teilschritts /5-2/ der Zufallsfaktor durch eine Methode vom Typ Offset-Register mit linearer Rückkopplung erhalten wird, und/oder das Vergleichsintervall durch ein Verfahren vom Typ Offset-Register mit linearer Rückkopplung ausgewählt wird.

7. Verfahren nach einem der vorstehenden Ansprüche, wobei die Teilschritte /5-1/ bis /5-5/ parallel für alle späteren Zustandsintervalle durchgeführt werden, die jeweils als Referenzintervall verwendet werden.

8. Verfahren nach einem der vorstehenden Ansprüche, wobei das System ein Luftfahrzeug (20) ist, der Zustand des Systems Koordinaten von Position, Geschwindigkeit und Verhalten des Luftfahrzeugs während des Fluges umfasst und wobei jede Messung des wahren Zustands des Systems einen Wert eines Abstands liefert, der zwischen dem Luftfahrzeug und einem Bodenpunkt besteht.

9. Recheneinheit (3), umfassend mindestens einen ersten Eingang, der angepasst ist, um Ergebnisse wiederholter Messungen von Beschleunigung und Winkelgeschwindigkeit eines Systems zu empfangen, einen zweiten Eingang, der angepasst ist, um Ergebnisse wiederholter Messungen eines wahren Zustands des Systems, zusätzlich zu den Messungen von Beschleunigung und Winkelgeschwindigkeit zu empfangen, und die Recheneinheit angeordnet ist, um ein Verfahren zur feldgeregelten Teilchenfilterung auszuführen, das einem der vorstehenden Ansprüche entspricht, um am Ausgang eine Reihe von Zustandsintervallen mit jeweiligen Gewichtungen zu erzeugen, wobei die Gewichtung, die mit jedem der Zustandsintervalle verknüpft ist, einem Wahrscheinlichkeitswert entspricht, damit der wahre Zustand des Systems in dem Zustandsintervall liegt.

10. Recheneinheit (3) nach Anspruch 9, vom Typ programmierbare Gate-Netzwerkschaltung, feste Gate-Netzwerkschaltung oder CPU.

11. Recheneinheit (3) nach Anspruch 9 oder 10, umfassend mehrere Teilrecheneinheiten (3-1, 3-2, ..., 3-N), die dazu bestimmt sind, einzeln den späteren Zustandsintervallen zugewiesen zu werden und angepasst sind, um mindestens die Teilschritte /5-1/ bis /5-5/ für alle späteren Zustandsintervalle parallel auszuführen.

12. Navigationszentrale mit Messkorrelation (10), die angepasst ist, um an Bord eines Fahrzeugs eingebaut zu werden, umfassend:
- eine Trägheitszentrale (1), die angepasst ist, um iterativ Beschleunigungen und Winkelgeschwindigkeiten des Fahrzeugs zu messen und um unter Verwendung der Messergebnisse der Beschleunigungen und Winkelgeschwindigkeiten jeweils aus mehreren früheren Zustandsintervallen spätere Zustandsintervalle abzuleiten, wobei jeder Zustand des Fahrzeugs Positions-, Geschwindigkeits- und Verhaltenskoordinaten des Fahrzeugs umfasst;
- ein Messsystem (2), das angepasst ist, um mindestens eine Eigenschaft eines wahren Zustands des Fahrzeugs iterativ zu messen; und
- eine Recheneinheit (3) nach einem der Ansprüche 9 bis 11, und angepasst, um mindestens eine Abweichung der Trägheitszentrale (1) unter einer Positionsabweichung, einer Geschwindigkeitsabweichung und einer Verhaltensabweichung unter Verwendung der Messergebnisse der Eigenschaft des wahren Fahrzeugzustands, die vom Messsystem (2) geliefert werden, zu reduzieren.

13. Fahrzeug, das eine Navigationszentrale mit Messkorrelation (10) nach Anspruch 12 umfasst.

## Claims

1. A box-regularised particle filtering method, for predicting a state of a system, said system being a vehicle fitted with a measurement correlation navigation unit, in particular an aircraft, a ground vehicle, a marine surface vessel, a submarine, a satellite or a space probe, the method comprising at least one execution of a sequence that includes the following steps:
/1/ a prediction step, comprising predicting subsequent state intervals, each subsequent state interval being obtained by applying at least one propagation rule to one of a plurality of previous state intervals;
/2/ a step of measuring a true state of the system;
/3/ a step of contracting at least one of the subsequent state intervals, as a function of at least one measurement result of the true state obtained in step /2/;
/4/ a weight updating step, comprising assigning a weight to each subsequent state interval as a function of a size of said subsequent state interval as resulting from step /3/, a size of said subsequent state interval as resulting from step /1/ prior to step /3/, and a weight of the previous state interval from which said subsequent state interval has resulted during step /1/; and
/5/ a step of redistributing the subsequent state intervals, comprising replacing at least one of the subsequent state intervals i with nᵢ subintervals from a division of the subsequent state interval i, i being an integer index for numbering the subsequent state intervals and nᵢ being a number of the subintervals that replace said subsequent state interval i, each subinterval being for constituting a previous state interval for a subsequent iteration of the sequence of steps /1/ to /5/, the method being **characterised in that** step /5/ comprises initialising the number of subintervals nᵢ, and comprises the sequence of the following substeps /5-1/ to/ 5-4/ which is performed for each of the subsequent state intervals alternatively used as the reference interval:
/5-1/ initially adopting the reference interval as the state interval retained;
/5-2/ obtaining a number which is between 0 and 1, called random factor, by a drawing method considered random, and selecting one of the subsequent state intervals, different or not from the reference interval, as a comparison interval by a selection method considered random;
/5-3/ if a result of multiplying the random factor by the weight of the reference interval, as updated in step /4, is less than the weight of the comparison interval, as updated in step /4/, then replacing the state interval previously retained with the comparison interval;
substeps /5-2/ and /5-3/ being repeated several times for each subsequent state interval used as the reference interval, then
/5-4/ increasing by one unit the number of subintervals for replacing the state interval which is retained after repeating substeps /5-2/ and /5-3/; and each subsequent state interval then being replaced in a substep /5-5/ with subintervals from a division of said subsequent state interval, in accordance with the number of subintervals resulting for said subsequent state interval from all executions of the substep /5-4/.

2. The method according to claim 1, wherein the substeps /5-2/ and /5-3/ are repeated a number of times which is between 1 and 100 for each subsequent state interval used as the reference interval.

3. The method according to claim 1 or 2, wherein step /5/ is executed only if a representativeness criterion is not met by the weights of the subsequent state intervals such as updated in step /4/.

4. The method according to any of the preceding claims, wherein, in step /4/, the updated weight of each subsequent state interval is equal to the weight of the previous state interval from which said subsequent state interval has resulted during step /1/, multiplied by the size of the subsequent state interval as resulting from step /3/, and divided by the size of the subsequent state interval as resulting from step /1/ before applying step /3/ to that subsequent state interval.

5. The method according to any of the preceding claims, wherein step /5/ further comprises the following additional substep, executed after each subsequent state interval has been replaced with subintervals obtained by division of said subsequent state interval:
/5-6/ a kernel smoothing substep, during which at least one of the subintervals and a weight associated with said subinterval are modified according to a probabilistic kernel to form a previous state interval which is to be used for the subsequent iteration of the sequence of steps /1/ to /5/.

6. The method according to any of the preceding claims, wherein, at each execution of substep /5-2/, the random factor is obtained by a linear feedback shift register type method, and/or the comparison interval is selected by a linear feedback shift register type method.

7. The method according to any of the preceding claims, wherein the substeps /5-1/ to /5-5/ are performed in parallel for all subsequent state intervals each used as a reference interval.

8. The method according to any of the preceding claims, wherein the system is an aircraft (20), the state of the system comprises position, speed and attitude coordinates of the aircraft during flight, and wherein each measurement of the true state of the system delivers a value of a distance existing between the aircraft and a ground point.

9. A computational unit (3), comprising at least one first input adapted to receive results of repeated measurements of acceleration and angular speed of a system, a second input adapted to receive results of repeated measurements of a true state of the system, in addition to the measurements of acceleration and angular speeds, and the computational unit being arranged to execute a box-regularised particle filtering method which is in accordance with any of the preceding claims, so as to output a series of state intervals with respective weights, the weight which is associated with each of the state intervals corresponding to a probability value for the true state of the system to be in said state interval.

10. The computational unit (3) according to claim 9, of the field programmable gate array circuit, fixed gate array circuit, or central unit processor type.

11. The computational unit (3) according to claim 9 or 10, comprising a plurality of computational subunits (3-1, 3-2,..., 3-N) which are to be dedicated one-to-one to the subsequent state intervals, and adapted to execute in parallel at least the substeps /5-1/ to /5-5/, for all subsequent state intervals.

12. A measurement correlation navigation unit (10), adapted to be carried on board a vehicle, comprising:
- an inertial unit (1), adapted to iteratively measure accelerations and angular speeds of the vehicle, and to deduce, by using measurement results of accelerations and angular speeds, subsequent state intervals respectively from several previous state intervals, each state of the vehicle comprising position, speed and attitude coordinates of said vehicle;
- a measurement system (2), adapted to iteratively measure at least one characteristic of a true state of the vehicle; and
- a computational unit (3) in accordance with any of claims 9 to 11, and adapted to reduce at least one drift of the inertial unit (1), among a position drift, a speed drift and an attitude drift, by using measurement results of the characteristic of the true state of the vehicle that are delivered by the measurement system (2).

13. A vehicle, comprising a measurement correlation navigation unit (10) which is in accordance with claim 12.
